# EUROPÄISCHE PATENTSCHRIFT

(11) **EP 4 403 498 B1**
(45) Veröffentlichungstag und Bekanntmachung des Hinweises auf die Patenterteilung: **21.10.2026**
(21) Anmeldenummer: 23152674.0
(22) Anmeldetag: 20.01.2023
(51) Int. Cl.: B65B 37/04, B65G 27/08, B65B 5/10, B65B 35/06

(54) **ZUFÜHRVORRICHTUNG ZUM ABGEBEN VON PRODUKTEN UND VERPACKUNGSMASCHINE MIT EINER SOLCHEN ZUFÜHRVORRICHTUNG**
FEEDING DEVICE FOR DISPENSING PRODUCTS AND PACKAGING MACHINE COMPRISING SUCH A FEEDING DEVICE
DISPOSITIF D'ALIMENTATION POUR DISTRIBUER DES PRODUITS ET MACHINE D'EMBALLAGE DOTÉE D'UN TEL DISPOSITIF D'ALIMENTATION

(43) Veröffentlichungstag der Anmeldung: 24.07.2024
(73) Patentinhaber: Uhlmann Pac-Systeme GmbH & Co. KG, 88471 Laupheim (DE)
(72) Erfinder: Werner, Johannes, 88471 Laupheim (DE); Krahl, Wolfgang, 88471 Laupheim (DE)
(74) Vertreter: Wächter, Jochen

(56) Entgegenhaltungen:
- EP-A1- 1 795 466
- EP-A1- 2 003 074
- EP-A1- 2 163 479
- DE-A1- 102005 041 915
- US-A1- 2020 317 452

## Beschreibung

Die vorliegende Erfindung betrifft eine Zuführvorrichtung zum Abgeben von als Schüttgut bereitgestellten Produkten, insbesondere von Solida, wie Tabletten, Kapseln oder Dragees, und eine Verpackungsmaschine mit einer solchen Zuführvorrichtung.

Insbesondere im pharmazeutischen Bereich werden die eingangs genannten Produkte häufig als Schüttgut bereitgestellt und mittels einer Zuführvorrichtung vereinzelt an entsprechende Produktaufnahmen, wie zum Beispiel Näpfe einer Blisterpackung, abgegeben. Um die Produkte in einen Abgabebereich zu fördern, kann die Zuführvorrichtung eine Fördereinrichtung mit einer Mehrzahl von Förderbahnen umfassen, die zum Beispiel durch Rinnen bzw. Nuten oder Füllröhrchen gebildet sind. Aufgrund der Produktgeometrie oder Produkttoleranz kann es vorkommen, dass sich Produkte in den Förderbahnen verklemmen und diese blockieren. Es ist daher bekannt, die Fördereinrichtung in Vibration zu versetzen, um sich verklemmende Produkte zu lösen und das Risiko des Blockierens der Fördereinrichtung zu reduzieren.

Eine Zuführvorrichtung, die den Oberbegriff des Anspruchs 1 offenbart, wird in der EP2163479A1 beschrieben.

Die Zuführvorrichtung kann dazu Anregungseinheiten zum Versetzen der Fördereinrichtung in Schwingung umfassen. Die Anregungseinheiten sind mit einer Rüttelplatte gekoppelt, die wiederum mit der Mehrzahl von Förderbahnen der Fördereinrichtung gekoppelt ist, um die Schwingungen weniger Anregungseinheiten auf die Mehrzahl von Förderbahnen zu übertragen. Derartige Rüttelplatten sind in der Regel schwimmend gelagert und werden von zwei Anregungseinheiten angeregt, die an gegenüberliegenden Seiten der Rüttelplatte angebracht sind. Sind diese Anregungseinheiten nicht optimal synchronisiert, was sich zum Beispiel durch Verschmutzung auch erst im Laufe der Produktion ergeben kann, führt dies zu Drehbewegungen der Rüttelplatte, die wiederum stark unterschiedliche Anregungsstärken der Förderbahnen zufolge haben. Dadurch wird die Zuverlässigkeit der Zuführvorrichtung negativ beeinflusst und es kann zu erhöhtem Verschleiß und erhöhten Geräuschemissionen kommen.

Es ist eine Aufgabe der vorliegenden Erfindung, eine Zuführvorrichtung und eine Verpackungsmaschine mit einer Zuführvorrichtung bereitzustellen, die bei einem einfachen und kostengünstigen Aufbau in der Lage ist, die Nachteile des Stands der Technik zu überwinden.

Diese Aufgabe wird durch den Gegenstand der Ansprüche 1 und 13 gelöst. Bevorzugte Ausführungsformen sind Gegenstand der abhängigen Ansprüche.

Eine erfindungsgemäße Zuführvorrichtung zum Abgeben von als Schüttgut bereitgestellten Produkten, insbesondere von Solida, wie Tabletten, Kapseln oder Dragees in einem Abgabebereich der Zuführvorrichtung umfasst eine Fördereinrichtung mit einer Mehrzahl von Förderbahnen zum Fördern der Produkte, eine Rüttelplatte, die mit der Fördereinrichtung derart gekoppelt ist, dass Schwingungen der Rüttelplatte auf die Fördereinrichtung übertragbar sind, zumindest eine Anregungseinheit zum Versetzen der Rüttelplatte in Schwingung, wobei die Anregungseinheit mit der Rüttelplatte gekoppelt ist, und mindestens ein Federelement, das elastisch verformbar ist und die Rüttelplatte trägt und schwingend lagert. Auf diese Art und Weise ist die Rüttelplatte derart in der Zuführvorrichtung gelagert, dass sie mittels der Anregungseinheit in Schwingung versetzt und aus einer Ausgangsposition ausgelenkt werden kann und von dem mindestens einen die Rüttelplatte tragenden Federelement in die Ausgangsposition der Rüttelplatte zurückgestellt wird. Die Rüttelplatte wird folglich mittels des mindestens einen Federelements in der Ausgangsposition positioniert. Dadurch ergibt sich eine einfach ausgebildete Lagerung der Rüttelplatte, die zugleich eine durch das mindestens eine Federelement definierte Bewegung der Rüttelplatte erlaubt. Das mindestens eine Federelement ist vorzugsweise unverformt und entspannt, wenn sich die Rüttelplatte in der Ausgangsposition befindet. Das mindestens eine Federelement ist vorzugsweise elastisch verformt und gespannt, wenn die Rüttelplatte aus der Ausgangsposition ausgelenkt ist. Dadurch ist die Rüttelplatte in die Ausgangsposition vorgespannt.

In einer besonders bevorzugten Ausführungsform umfasst die Zuführvorrichtung eine Mehrzahl von Federelementen, die elastisch verformbar sind und die Rüttelplatte tragen und schwingend lagern. Dadurch kann die Masse der Rüttelplatte auf die Mehrzahl von Federelementen verteilt werden, die die Rüttelplatte folglich zuverlässig tragen. Außerdem ist die Mehrzahl von Federelementen vorzugsweise symmetrisch an der Rüttelplatte angebracht. Die Federelemente der Mehrzahl von Federelementen sind bevorzugt analog zueinander ausgebildet, sodass alle hierin für das mindestens eine Federelement beschriebenen Merkmale entsprechend auf die Mehrzahl von Federelementen zutreffen.

Insbesondere umfasst die Mehrzahl von Federelementen ein erstes Federelement und ein zweites Federelement, vorzugsweise nur das erste und das zweite Federelement. Dadurch kommen die Vorteile einer Mehrzahl von Federelementen bei dennoch einfacher Ausbildung der Lagerung der Rüttelplatte zum Tragen. Das erste und das zweite Federelement sind vorzugsweise einander gegenüberliegend an der Rüttelplatte angebracht. Dadurch ist die Rüttelplatte vorteilhaft symmetrisch gelagert.

Dass das mindestens eine Federelement die Rüttelplatte trägt, bedeutet, dass das mindestens eine Federelement zum Beispiel die Rüttelplatte stützt oder die Rüttelplatte an dem mindestens einen Federelement aufgehängt ist. Ein besonders einfacher und somit kostengünstiger Aufbau ergibt sich, wenn die Rüttelplatte bevorzugt ausschließlich durch das mindestens eine Federelement gelagert ist. Es sind folglich keine weiteren Komponenten zum Lagern der Rüttelplatte erforderlich. Umfasst die Zuführvorrichtung eine Mehrzahl von Federelementen, insbesondere das erste und das zweite Federelement, kann die Rüttelplatte ausschließlich durch die Mehrzahl von Federelementen gelagert sein.

Vorzugsweise ist die Rüttelplatte mit dem mindestens einen Federelement starr verbunden. Dadurch ist das mindestens eine Federelement an der Rüttelplatte translatorisch und rotatorisch festgelegt. Zumindest in dem Bereich, in dem das mindestens eine Federelement an der Rüttelplatte angebracht ist, sind das mindestens eine Federelement und die Rüttelplatte daher weder translatorisch noch rotatorisch relativ zueinander bewegbar. Dadurch wird sichergestellt, dass die Rüttelplatte möglichst definiert gelagert und nur in dem Maß bewegbar ist, das durch das mindestens eine Federelement vorgegeben ist.

Das mindestens eine Federelement ist bevorzugt dazu eingerichtet, die Rüttelplatte zu führen. Mit anderen Worten bildet das mindestens eine Federelement eine Führungseinrichtung zum Führen der Rüttelplatte bei Bewegung, insbesondere bei durch die Anregungseinheit induzierten Schwingungen. Hierzu kann das mindestens eine Federelement derart ausgebildet sein, dass es die Rüttelplatte entlang einer definierten Bewegungsbahn führt. Genauer kann das mindestens eine Federelement derart ausgebildet sein, dass es eine Bewegung der Rüttelplatte entlang der definierten Bewegungsbahn erlaubt und eine von der definierten Bewegungsbahn abweichende Bewegung unterbindet. Das mindestens eine Federelement ermöglicht folglich eine Bewegung der Rüttelplatte ausschließlich entlang der definierten Bewegungsbahn. Durch die Führung der Rüttelplatte wird verhindert, dass diese bei Anregung durch die Anregungseinheit ungewünschte oder unkontrollierbare Bewegungen vollzieht. Vielmehr wird die Rüttelplatte gleichmäßig bewegt, sodass keine stark unterschiedlichen Beschleunigungen der Mehrzahl von Förderbahnen resultieren, kein erhöhter Verschleiß und keine erhöhten Geräuschemissionen auftreten.

In einer bevorzugten Ausführungsform ist das mindestens eine Federelement derart ausgebildet, dass es eine Bewegung der Rüttelplatte in einer Bewegungsebene ermöglicht und in einer Richtung senkrecht zur Bewegungsebene unterbindet. Die Bewegungsbahn liegt dann in der Bewegungsebene. Ferner ist es bevorzugt, dass die Anregungseinheit die Rüttelplatte in einer Anregungsrichtung anregt, die parallel zur Bewegungsebene ausgerichtet ist. Vorzugsweise ist die Anregungsrichtung parallel zur Bewegungsbahn ausgerichtet. Die Rüttelplatte weist eine Oberseite und eine Unterseite auf und die Bewegungsebene ist vorzugsweise parallel zur Oberseite und zur Unterseite der Rüttelplatte ausgerichtet.

In einer alternativen Ausführungsform kann das mindestens eine Federelement derart ausgebildet sein, dass es eine Bewegung der Rüttelplatte in eine Richtung im Wesentlichen senkrecht zur Oberseite und zur Unterseite der Rüttelplatte ermöglicht und eine Bewegung in einer Ebene parallel zur Oberseite und zur Unterseite der Rüttelplatte unterbindet.

In einer besonders bevorzugten Ausführungsform ist das mindestens eine Federelement als Biegefeder, insbesondere als Blattfeder, ausgebildet. Beispielsweise kann das erste Federelement als erste Blattfeder und das zweite Federelement als zweite Blattfeder ausgebildet sein. Das mindestens eine Federelement in Form einer Biegefeder weist einen ersten Endabschnitt und einen dem ersten Endabschnitt gegenüberliegenden zweiten Endabschnitt auf, wobei der zweite Endabschnitt an der Rüttelplatte angebracht ist und der erste Endabschnitt an einer anderen Komponente der Zuführvorrichtung fixiert ist, wie z.B. an einem Rahmen, Gestell oder Gehäuse der Zuführvorrichtung oder eines Sortierkastens derselben. Auf diese Weise ist das mindestens eine Federelement besonders einfach ausgebildet und die Federcharakteristik des mindestens einen Federelements kann gut eingestellt werden. Im Allgemeinen ist das mindestens eine Federelement vorzugsweise nicht vorgespannt.

Das mindestens eine Federelement ist in dieser Ausführungsform mittels des ersten Endabschnitts einseitig angespannt. Der zweite Endabschnitt des mindestens einen Federelements ist vorzugsweise ein freies Ende des Federelements, das bezüglich des ersten Endabschnitts bewegbar ist. Die Bewegbarkeit resultiert aus der elastischen Verformbarkeit des Federelements. Die Rüttelplatte ist vorzugsweise im zweiten Endabschnitt des mindestens einen Federelements translatorisch und rotatorisch am Federelement festgelegt.

In Form einer Blattfeder erstreckt sich das mindestens eine Federelement vorzugsweise weiter in eine Längsrichtung als in eine erste Querrichtung und in eine zweite Querrichtung. Die erste und die zweite Querrichtung sind senkrecht zur Längsrichtung sowie senkrecht zueinander ausgerichtet. Bevorzugt ist das mindestens eine Federelement flach und mit einem im Wesentlichen rechteckigen Querschnitt ausgebildet. Das mindestens eine Federelement kann eine quaderförmige Form aufweisen. Es ist auch denkbar, dass das mindestens eine Federelement einen sich entlang der Längsrichtung verändernden Querschnitt aufweist. Auf diese Weise können die Steifigkeit des Federelements und dadurch die Federeigenschaften des Federelements angepasst werden. Das mindestens eine Federelement kann zum Beispiel als Flach-, Trapez- oder Parabelfeder ausgebildet sein. Unabhängig davon kann das mindestens eine Federelement als Metallband, insbesondere als Stahlband, ausgebildet sein.

Das mindestens eine Federelement, insbesondere in Form einer Blattfeder, weist in Längsrichtung eine Länge, in der ersten Querrichtung eine Breite und in der zweiten Querrichtung eine Höhe auf, wobei das Federelement vorzugsweise in der Längsrichtung und in der zweiten Querrichtung nicht verformbar ist und in der ersten Querrichtung elastisch verformbar ist. Hierzu können die Länge und die Höhe des Federelements derart dimensioniert sein, dass das mindestens eine Federelement in der Längsrichtung und in der zweiten Querrichtung nicht verformbar ist. Die Breite hingegen kann derart gewählt sein, dass das mindestens eine Federelement in die erste Querrichtung verformbar, insbesondere biegbar ist. Vorzugsweise ist die Länge größer als die Breite und die Höhe und die Höhe ist größer als die Breite des mindestens einen Federelements.

Vorzugsweise erstrecken sich die Längsrichtung und die erste Querrichtung parallel zur Oberseite der Rüttelplatte und die zweite Querrichtung erstreckt sich senkrecht zur Oberseite der Rüttelplatte.

Um die Förderbahnen der Mehrzahl von Förderbahnen möglichst gleichmäßig zu beschleunigen und nicht zu unterschiedlich zu belasten, ist bevorzugt eine erste Befestigungsstelle des mindestens einen Federelements an der Rüttelplatte auf einer ersten Achse angeordnet, die den Schwerpunkt der Rüttelplatte schneidet. Vorzugsweise ist die erste Achse parallel zu der Richtung ausgerichtet, in der das mindestens eine Federelement bewegbar bzw. verformbar ist und eine Bewegung der Rüttelplatte ermöglicht, wie zum Beispiel die erste Querrichtung in dem zuvor beschriebenen Ausführungsbeispiel. Bevorzugt ist die Bewegungsbahn der Rüttelplatte parallel zur ersten Achse ausgerichtet. Die erste Befestigungsstelle kann durch ein Befestigungselement, wie z.B. eine Schraube oder einen Bolzen, definiert sein, das das mindestens eine Federelement mit der Rüttelplatte verbindet.

Das mindestens eine Federelement ist vorzugsweise in einem ersten Befestigungsabschnitt der Rüttelplatte angebracht, wobei der erste Befestigungsabschnitt in einem ersten Randbereich der Rüttelplatte vorgesehen ist. Die erste Befestigungsstelle des mindestens einen Federelements kann den ersten Befestigungsabschnitt bilden oder im ersten Befestigungsabschnitt liegen, beispielsweise wenn mehrere Befestigungselemente vorgesehen sind. Zum Beispiel sind zwei Befestigungselemente vorgesehen, um ein Federelement translatorisch und rotatorisch an der Rüttelplatte festzulegen und die zwei Befestigungsstellen der zwei Befestigungselemente bilden dann den ersten Befestigungsabschnitt. Vorzugweise verläuft die erste Achse durch den ersten Befestigungsabschnitt und im Wesentlichen senkrecht zu einem ersten Rand der Rüttelplatte im ersten Randbereich.

Die Rüttelplatte ist vorzugsweise im Wesentlichen rechteckig bzw. quaderförmig ausgebildet und weist die Oberseite, die Unterseite sowie vorzugsweise senkrecht zu diesen vier Seitenflächen auf. Die erste Achse ist dann bevorzugt senkrecht zu einer ersten Seitenfläche angeordnet, in deren Randbereich der erste Befestigungsabschnitt vorgesehen ist. Sollten die Seitenflächen nicht senkrecht zur Oberseite und zur Unterseite ausgebildet sein, ist die erste Achse senkrecht zur Projektion des ersten Rands in die Ebene der ersten Achse ausgerichtet.

Die Anregungseinheit kann ausschließlich von der Rüttelplatte getragen werden. Zum Beispiel ist an der Rüttelplatte eine Halterung angebracht, an der die Anregungseinheit befestigt ist. Es bedarf dann keiner Lagerung der Anregungseinheit in der Zuführvorrichtung. Auch die Rüttelplatte ist dann nicht über die Anregungseinheit mit weiteren Komponenten der Zuführvorrichtung gekoppelt, sondern ausschließlich durch das mindestens eine Federelement gelagert.

Vorzugsweise ist die Anregungseinheit in einem zweiten Befestigungsabschnitt der Rüttelplatte angebracht, wobei der zweite Befestigungsabschnitt in einem zweiten Randbereich der Rüttelplatte angeordnet ist. Der zweite Randbereich unterscheidet sich vom ersten Randbereich und ist vorzugsweise an einer Seitenfläche der Rüttelplatte angeordnet, die senkrecht zur ersten Seitenfläche verläuft. Eine zweite Achse, die senkrecht zur ersten Achse ausgerichtet ist und den Schwerpunkt der Rüttelplatte schneidet, verläuft bevorzugt durch den zweiten Befestigungsabschnitt. Die zweite Achse kann senkrecht zu einem zweiten Rand der Rüttelplatte im zweiten Randbereich ausgerichtet sein.

Insbesondere kann eine zweite Befestigungsstelle der Anregungseinheit an der Rüttelplatte auf der zweiten Achse angeordnet sein. Auch diese zweite Befestigungsstelle kann durch ein Befestigungselement, wie z.B. eine Schraube oder einen Bolzen, definiert sein, das die Anregungseinheit oder deren Halterung mit der Rüttelplatte verbindet. Die zweite Befestigungsstelle der Anregungseinheit kann den zweiten Befestigungsabschnitt bilden oder im zweiten Befestigungsabschnitt liegen, beispielsweise wenn mehrere Befestigungselemente vorgesehen sind.

Bevorzugt umfasst die Zuführvorrichtung genau eine Anregungseinheit. Dadurch kann die Zuführvorrichtung kostengünstig ausgebildet werden und die Fehleranfälligkeit sowie der Wartungsaufwand reduziert werden. Insbesondere kann eine asynchrone Anregung der Rüttelplatte verhindert werden. Es ist aber auch denkbar, eine Mehrzahl von Anregungseinheiten vorzusehen, die dann bevorzugt symmetrisch an der Rüttelplatte angebracht und synchronisiert sind.

Die Anregungseinheit kann durch eine Vibrationseinrichtung gebildet sein, die zum Erzeugen von Vibrationen eingerichtet ist. Hierzu kann die Vibrationseinrichtung eine Unwucht umfassen, die von einem rotatorischen Antrieb angetrieben wird. Die Anregungseinheit bzw. Vibrationseinrichtung kann aber auch einen Linearantrieb, insbesondere eine pneumatische, elektrische oder hydraulische Zylindereinheit, umfassen. In beiden Fällen wird ein einfacher Aufbau erreicht und kann die Anregungseinheit durch Standardkomponenten gebildet werden. Eine Anregungsfrequenz und -amplitude der Anregungsbewegung sind einfach einstellbar.

Die Anregungseinheit ist vorzugsweise derart mit der Rüttelplatte gekoppelt, dass Anregungsbewegungen der Anregungseinheit auf die Rüttelplatte übertragen werden. Insbesondere kann die Anregungseinheit zumindest translatorisch, vorzugsweise auch rotatorisch, an der Rüttelplatte festgelegt sein. Hierzu kann die Halterung entsprechend ausgebildet und mit der Rüttelplatte verbunden sein. Mit anderen Worten kann die Anregungseinheit starr mit der Rüttelplatte verbunden sein.

Im Allgemeinen kann die Anregungseinheit die Anregungsbewegung in der Anregungsrichtung erzeugen. Vorzugsweise ist die Anregungsrichtung parallel zu der Richtung, in der das mindestens eine Federelement bewegbar bzw. verformbar ist und eine Bewegung der Rüttelplatte ermöglicht, wie zum Beispiel die erste Querrichtung in dem zuvor beschriebenen Ausführungsbeispiel.

Bei den als Schüttgut bereitgestellten Produkten handelt es sich insbesondere um Nahrungs- oder Nahrungsergänzungsmittel, um medizinische oder pharmazeutische Produkte, in Form von Solida, insbesondere in Form von Tabletten, Kapseln, Dragees, Oblongs oder dergleichen. In einer besonders bevorzugten Ausführungsform handelt es sich bei der Zuführvorrichtung um eine Zuführvorrichtung zum vereinzelten Abgeben der Produkte in Produktaufnahmen, insbesondere in Höfe bzw. Näpfe, die in einer Formfolie oder einem Träger ausgebildet sind.

Im Allgemeinen kann die Mehrzahl von Förderbahnen durch eine Mehrzahl von Füllrohre gebildet sein. Jedes Füllrohr weist ein Lumen bzw. eine Durchtrittsöffnung auf, durch die die Produkte in den Abgabebereich gefördert werden können.

Erfindungsgemäß umfasst die Zuführvorrichtung eine Sortierplatte mit einer Mehrzahl von ersten Durchtrittsöffnungen. Jeweils ein Füllrohr der Mehrzahl von Füllrohren steht mit einer ersten Durchtrittsöffnung der Mehrzahl von ersten Durchtrittsöffnungen in Verbindung. Genauer kann dann das Lumen jedes Füllrohrs mit der jeweiligen ersten Durchtrittsöffnung in Verbindung stehen, zum Beispiel indem die Mehrzahl von Füllrohren in die Mehrzahl von ersten Durchtrittsöffnungen eingesetzt sein. Die als Schüttgut bereitgestellten Produkte können auf der Sortierplatte angeordnet werden und durch diese in die Füllrohre sortiert werden. Hierzu kann die Sortierplatte in einer Richtung senkrecht zu der Oberfläche, auf der die Produkte angeordnet werden, bewegbar sein.

Unabhängig davon umfasst die Rüttelplatte erfindungsgemäß eine Mehrzahl von Durchtrittsöffnungen, die auch als zweite Durchtrittsöffnungen bezeichnet werden, wobei sich jeweils ein Füllrohr der Mehrzahl von Füllrohren durch eine zweite Durchtrittsöffnung der Mehrzahl von zweiten Durchtrittsöffnungen hindurch erstreckt. Die Mehrzahl von zweiten Durchtrittsöffnungen erstrecken sich vorzugsweise von der Oberseite zu der Unterseite der Rüttelplatte. Durch die Anregung der Rüttelplatte, die auf die Mehrzahl von Füllrohren übertragen wird, kann das Risiko, dass ein Produkt in einem Füllrohr verklemmt, minimiert werden und dennoch entstehende Verklemmungen können gelöst werden.

Bevorzugt sind die Sortierplatte und die Rüttelplatte beabstandet zueinander angeordnet, insbesondere parallel zueinander. Die Sortierplatte kann durch mindestens ein weiteres Federelement gelagert werden, auf das die hierin bezüglich des mindestens einen Federelements der Rüttelplatte entsprechend zutreffen. Die Sortierplatte kann aber auch auf herkömmliche Art und Weise gelagert sein. In einer alternativen Ausführungsform wird die Sortierplatte durch die Rüttelplatte gebildet. All hierin bezüglich der Rüttelplatte und des mindestens einen Federelements, das diese lagert, beschriebenen Merkmale treffen dann analog auf die Sortierplatte zu.

Die Mehrzahl von Füllrohren sind vorzugsweise im Wesentlichen parallel zueinander angeordnet. Sie können sich im Wesentlichen senkrecht zur Oberseite der Rüttelplatte erstrecken. Die Bewegungsbahn der Rüttelplatte ist vorzugsweise senkrecht zur Längsrichtung der Mehrzahl von Füllrohren ausgerichtet. Die Füllrohre sind vorzugsweise derart dimensioniert, dass die Produkte darin in einer Reihe in axialer Richtung der Füllrohre hintereinander angeordnet sind, jedoch nicht mehrere Produkte in radialer Richtung der Füllrohren nebeneinander angeordnet sein können.

Die Anordnung der Mehrzahl von Füllrohren relativ zueinander entspricht im Abgabebereich der Zuführvorrichtung vorzugsweise der Anordnung der Produktaufnahmen, insbesondere der Folienhöfe. Bevorzugt ist die Mehrzahl von zweiten Durchtrittsöffnungen und gegebenenfalls auch die Mehrzahl der ersten Durchtrittsöffnungen entsprechend relativ zueinander angeordnet. Der Bereich der Mehrzahl von zweiten Durchtrittsöffnungen der Rüttelplatte wird daher auch als Formatbereich bezeichnet. Der erste und der zweite Befestigungsbereich sind vorzugsweise außerhalb des Formatbereichs ausgebildet und entlang des jeweiligen Randbereichs mittig bezüglich des Formatbereichs angeordnet.

Die Zuführvorrichtung kann weiterhin einen Trichter zum Befüllen der Zuführvorrichtung mit den als Schüttgut bereitgestellten Produkten umfassen. Vom Trichter werden die Produkte der Sortierplatte zugeführt, beispielsweise über eine Vibrationsrinne, in der Bruch und Staub ausgeschieden wird.

Die vorliegende Erfindung betrifft weiterhin eine Verpackungsmaschine zum Verpacken von als Schüttgut bereitgestellten Produkten, insbesondere von Solida, wie Tabletten, Kapseln oder Dragees. Die Verpackungsmaschine umfasst eine Formeinrichtung zum Formen von Aufnahmen in ein erstes Verpackungsmaterial, eine erfindungsgemäße Zuführvorrichtung zum Abgeben der Produkte in die Aufnahmen und eine Schließeinrichtung zum Verschließen der Aufnahmen mit einem zweiten Verpackungsmaterial.

Auf diese Weise wirken sich die Vorteile der erfindungsgemäßen Zuführvorrichtung entsprechend auf die gesamte Verpackungsmaschine aus, die dadurch in der Lage ist, die Produkte schonend und zuverlässig zu verpacken.

Besonders bevorzugt handelt es sich beim ersten Verpackungsmaterial um eine Formfolie, insbesondere aus Kunststoff, die auf einer Vorratsrolle bereitgestellt werden kann. Die Aufnahmen im Verpackungsmaterial können durch Näpfe bzw. Höfe in der Formfolie gebildet werden, die von der Formeinrichtung in die Formfolie eingebracht werden, z.B. durch Tiefziehen. Die Zuführvorrichtung ist dann dazu eingerichtet, einzelnen Produkte in die Näpfe der Formfolie abzugeben.

Vorzugsweise umfasst die Verpackungsmaschine eine Heizeinrichtung zum Erwärmen des ersten Verpackungsmaterials, insbesondere der Formfolie, vor der Formeinrichtung.

Dadurch kann das erste Verpackungsmaterial auf eine Temperatur erwärmt werden, die das nachfolgende Formen in der Formeinrichtung vereinfacht oder überhaupt erst ermöglicht.

Bei dem zweiten Verpackungsmaterial handelt es sich bevorzugt um eine Deckfolie, insbesondere aus Kunststoff oder Metall (z.B. Aluminium), die auf einer Vorratsrolle bereitgestellt werden kann. Die Schließeinrichtung ist vorzugsweise als Siegeleinrichtung zum Siegeln der Deckfolie an die Formfolie ausgebildet. Dadurch werden die Aufnahmen für die Produkte sicher und dicht verschlossen.

Die Verpackungsmaschine kann weiterhin eine Schneid- oder Stanzeinrichtung umfassen, um einzelne Verpackungseinheiten aus dem Verbund aus Formfolie und Deckfolie herauszutrennen.

In einer besonders bevorzugten Ausführungsform ist die Verpackungsmaschine eine Blistermaschine zum Verpacken von medizinischen oder pharmazeutischen Produkten. Die Verpackungseinheiten sind dann einzelne Blisterpackungen, die jeweils einen Napf oder eine Mehrzahl von Näpfen mit jeweils einem Produkt aufweisen.

Weitere Merkmale und Vorteile der vorliegenden Erfindung ergeben sich aus der nachfolgenden Beschreibung unter Bezugnahme auf die Zeichnungen.
- Fig. 1: zeigt schematisch eine Verpackungsmaschine in einer perspektivischen Ansicht.
- Fig. 2: zeigt eine Ausführungsform einer Zuführvorrichtung in einer perspektivischen Ansicht.
- Fig. 3: zeigt schematisch einen Ausschnitt einer erfindungsgemäßen Zuführvorrichtung im Bereich einer Sortierplatte und einer Rüttelplatte der Zuführvorrichtung in einer Schnittansicht entlang der Linie III-III in Fig. 2.
- Fig. 4: zeigt einen Ausschnitt der erfindungsgemäßen Zuführvorrichtung im Bereich der Rüttelplatte in einer perspektivischen Ansicht.
- Fig. 5: zeigt die in Fig. 4 dargestellten Komponenten der erfindungsgemäßen Zuführvorrichtung in Explosionsansicht.
- Fig. 6: zeigt die in Fig. 4 dargestellten Komponenten in einer Seitenansicht gemäß Pfeil VI in Fig. 4.
- Fig. 7: zeigt die in Fig. 4 dargestellten Komponenten in einer Frontansicht gemäß Pfeil VII in Fig. 4.

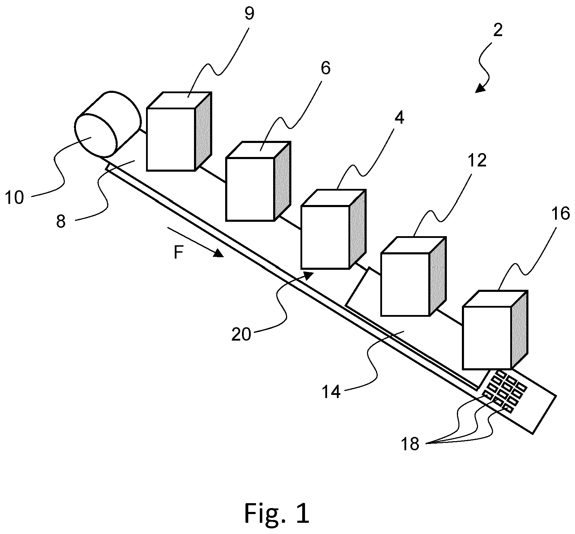

In Fig. 1 ist eine Verpackungsmaschine 2 mit einer erfindungsgemäßen Zuführvorrichtung 4 schematisch in einer perspektivischen Ansicht dargestellt. Es versteht sich, dass weder die Zuführvorrichtung 4 auf die Verwendung in einer solchen Verpackungsmaschine 2 beschränkt ist, noch die Verpackungsmaschine 2 auf die dargestellte Ausführungsform beschränkt ist.

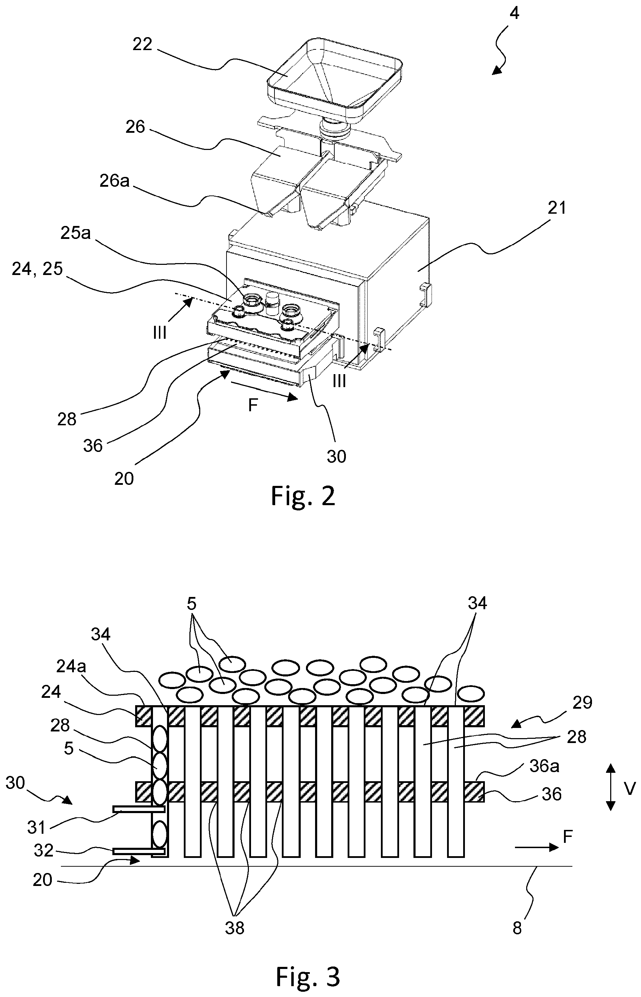

Die Verpackungsmaschine 2 ist zum Verpacken von als Schüttgut bereitgestellten Produkten 5 (siehe Fig. 3), insbesondere von Solida, wie zum Beispiel Tabletten, Kapseln, Oblongs oder Dragees eingerichtet. Hierzu umfasst die Verpackungsmaschine 2 eine Formeinrichtung 6 zum Formen von Aufnahmen, wie zum Beispiel Näpfen, in ein erstes Verpackungsmaterial 8. Das erste Verpackungsmaterial durchläuft die Verpackungsmaschine 2 bzw. deren einzelne Stationen in einer Förderrichtung F. Bei dem ersten Verpackungsmaterial 8 handelt es sich hier um eine Formfolie, die auf einer Vorratsrolle 10 bereitgestellt ist.

Um das erste Verpackungsmaterial 8 schonend verformen zu können, kann die Verpackungsmaschine 2 vor der Formeinrichtung 6 eine Heizeinrichtung 9 umfassen, die zum Erwärmen des ersten Verpackungsmaterials 8 eingerichtet ist. Die Zuführvorrichtung 4 ist der Formeinrichtung 6 nachgeordnet und dazu eingerichtet, die Produkte 5 in die Aufnahmen, die in dem ersten Verpackungsmaterial 8 ausgebildet wurden, zu füllen.

Auf die Zuführvorrichtung 4 folgt eine Schließeinrichtung 12 zum Verschließen der Aufnahmen mit einem zweiten Verpackungsmaterial 14, bei dem es sich vorzugsweise um eine Deckfolie handelt, die ebenfalls auf einer Vorratsrolle (nicht dargestellt) bereitgestellt werden kann. Die Schließeinrichtung 12 ist bevorzugt als Siegeleinrichtung ausgebildet, um die Deckfolie an die Formfolie zu Siegeln. Ferner kann die Verpackungsmaschine 2 nach der Schließeinrichtung 12 eine Schneid- oder Stanzeinrichtung 16 umfassen, die einzelne Verpackungseinheiten 18 aus dem Verbund aus erstem und zweitem Verpackungsmaterial 8, 14 heraustrennt.

Die Verpackungsmaschine 2 ist vorzugsweise eine Blistermaschine zur Herstellung von als Blisterpackungen ausgebildeten Verpackungseinheiten 18, die jeweils eine Mehrzahl von Näpfen gefüllt mit zumindest einem medizinischen oder pharmazeutischen Produkt aufweisen.

Eine beispielhafte Ausführungsform der Zuführvorrichtung 4 zum Abgeben der Produkte in einem Abgabebereich 20 der Zuführvorrichtung 4 ist in Fig. 2 perspektivisch dargestellt. Die Zuführvorrichtung 4 kann eine Grundeinheit 21 umfassen, die die weiteren Komponenten der Zuführvorrichtung 4 trägt und ggf. Antriebe und Steuerkomponenten aufnehmen kann. Weiterhin kann die Zuführvorrichtung 4 einen Trichter 22 zum Befüllen der Zuführvorrichtung 4 mit den als Schüttgut bereitgestellten Produkten 5 umfassen. Vom Trichter 22 werden die Produkte 5 einer Sortierplatte 24 zugeführt, die in einem Sortierkasten 25 aufgenommen sein kann. Hierzu kann die Zuführvorrichtung 4 eine Transporteinrichtung 26 umfassen, die beispielsweise zumindest eine Vibrationsrinne aufweist und der Ausscheidung von Bruch und Staub dient. Von der Transporteinrichtung 26 können die Produkte über flexible Schläuche (nicht dargestellt), die von Öffnungen 26a der Transporteinrichtungen 26 zu Öffnungen 25a im Sortierkasten 25 verlaufen, dem Sortierkasten 25 und der darin angeordneten Sortierplatte 24 zugeführt werden.

In Fig. 3 ist ein Ausschnitt der Zuführvorrichtung 4 zwischen der Sortierplatte 24 und dem Abgabebereich 20 in einer Schnittansicht entlang der Linie III-III in Fig. 2 dargestellt. Wie sich aus einer Zusammenschau der Fig. 2 und 3 ergibt, ist die Sortierplatte 24 zum Einsortieren der Produkte 5 in eine Mehrzahl von Förderbahnen 28 einer Fördereinrichtung 29 eingerichtet, wobei die Mehrzahl von Förderbahnen 28 in der dargestellten Ausführungsform als Füllrohre 28 ausgebildet sind. Zum Einsortieren kann die Sortierplatte 24 in einer Richtung senkrecht zu der Oberfläche 24a der Sortierplatte 24 auf und ab bewegbar sein, wie in Fig. 3 durch den Pfeil V gekennzeichnet. In den Füllrohren 28 fallen die Produkte 5 in Richtung Abgabebereich 20. Um die Produkte 5 einzeln abgeben zu können, kann die Zuführvorrichtung 4 eine Absperreinrichtung 30 umfassen, die die Produkte in den Füllrohren 28 zurückhält und einzeln freigibt. Auf dem Fachmann bekannte Art und Weise kann die Absperreinrichtung 30 beispielsweise zwei Absperrfinger 31, 32 je Füllrohr 28 umfassen.

Die Sortierplatte 24 weist enie Mehrzahl von ersten Durchtrittsöffnungen 34 auf, wobei jeweils ein Füllrohr 28 mit einer ersten Durchtrittsöffnung 34 in Verbindung steht, sodass die Produkte 5 von der Oberfläche 24a der Sortierplatte 24 mittels der ersten Durchtrittsöffnungen 34 in die Füllrohre 28 fallen können. Beispielsweise sind die Füllrohre 28 in die ersten Durchtrittsöffnungen 34 eingesetzt.

Bevorzugt ist die Mehrzahl von Füllrohren 28 relativ zueinander in einer Anordnung angeordnet, die der Anordnung der Aufnahmen für die Produkte 5 im ersten Verpackungsmaterial 8 entspricht. Um in jede Aufnahme ein Produkt abgeben zu können, sind die Füllrohre 28 bevorzugt derart dimensioniert, dass in jedem Füllrohr 28 mehrere Produkte 5 in einer Reihe in Längsrichtung des Füllrohrs 28 hintereinander angeordnet sind. In radialer Richtung des Füllrohrs 28 können jedoch nicht mehrere Produkte nebeneinander angeordnet sein, die ansonsten gleichzeitig abgegeben werden würden. In Abhängigkeit von der Geometrie und Größe der Produkte 5 und der Dimensionierung der Mehrzahl von Füllrohren 28 kann es dazu kommen, dass sich ein Produkt 5 in einem Füllrohr 28 verklemmt, sodass die Aufnahmen im ersten Verpackungsmaterial 8 durch dieses Füllrohr 28 nicht weiter befüllt werden.

Die Zuführvorrichtung 4 umfasst daher eine Rüttelplatte 36, die mit der Mehrzahl von Füllrohren 28 derart gekoppelt ist, dass Schwingungen der Rüttelplatte 36 auf die Mehrzahl von Füllrohren 28 übertragbar sind. Dadurch, dass die Mehrzahl von Füllrohren 28 in Schwingung versetzt wird, können Verklemmungen von Produkten 5 vermieden oder wieder gelöst werden. Erfindungsgemäß umfasst die Rüttelplatte 36 eine Mehrzahl von zweiten DurchtrittsÖffnungen 38, wobei sich jeweils ein Füllrohr 28 durch eine zweite Durchtrittsöffnung 38 hindurch erstreckt. Jedes Füllrohr 28 kann auch mehrteilig ausgebildet sein.

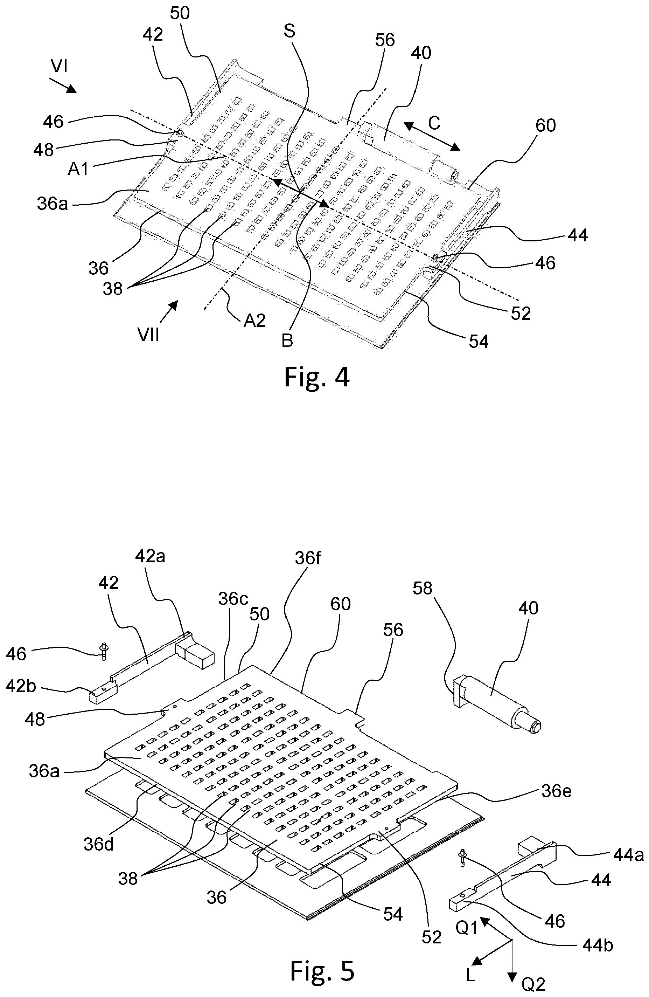

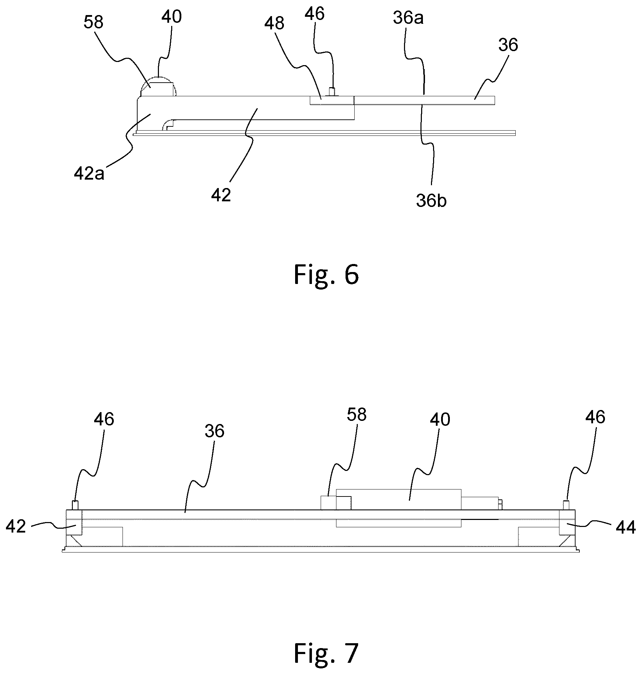

Die Rüttelplatte 36 sowie deren Lagerung sind nachfolgend unter Bezugnahme auf die Fig. 4 bis 7 detaillierter beschrieben, wobei in Fig. 4 eine perspektivische Ansicht, in Fig. 5 eine Explosionsansicht, in Fig. 6 eine Seitenansicht und in Fig. 7 eine Frontansicht gezeigt ist.

Die Zuführvorrichtung 4 umfasst eine Anregungseinheit 40 zum Versetzen der Rüttelplatte 36 in Schwingung. Die Anregungseinheit 40 ist mit der Rüttelplatte 36 gekoppelt. Zudem umfasst die Zuführvorrichtung 4 mindestens ein Federelement 42, das elastisch verformbar ist und die Rüttelplatte 36 trägt und schwingend lagert. In der dargestellten Ausführungsform umfasst die Zuführvorrichtung 4 eine Mehrzahl von Federelementen 42, 44, genauer ein erstes Federelement 42 und ein zweites Federelement 44. Das erste Federelement 42 und das zweite Federelement 44 sind im Wesentlichen analog ausgebildet, insbesondere spiegelsymmetrisch ausgebildet, sodass die hierin beschriebenen Merkmale in der Regel auf beide Federelement 42, 44 zutreffen, sofern nicht anders beschrieben.

Bevorzugt ist die Rüttelplatte 36 ausschließlich durch das mindestens eine Federelement 42, 44, hier also ausschließlich durch das erste Federelement 42 und das zweite Federelement 44, gelagert. Auf weitere Stütz- und Lagerkomponenten kann verzichtet werden. Die Rüttelplatte 36 kann an dem mindestens einen Federelement 42, 44 translatorisch und rotatorisch festgelegt sein. Beispielsweise ist das mindestens eine Federelement 42, 44 mittels eines Befestigungselements 46, wie einer Schraube oder einem Bolzen, an der Rüttelplatte 36 angebracht. Neben dem Befestigungselement 46 kann ein Sicherungsmittel (nicht dargestellt), zum Beispiel ein Stift, vorgesehen sein, um das mindestens eine Federelement 42, 44 relativ zur Rüttelplatte 36 gegen Verdrehen zu sichern. Die rotatorische Sicherung kann alternativ auch durch einen Formschluss zwischen Rüttelplatte 36 und Federelement 42, 44 realisiert werden. Das Befestigungselement 46 kann eine erste Befestigungsstelle definieren, an der das mindestens eine Federelement 42, 44 an der Rüttelplatte 36 befestigt ist.

Das mindestens eine Federelement 42, 44 kann einen ersten Endabschnitt 42a, 44a und einen dem ersten Endabschnitt 42a, 44a gegenüberliegenden zweiten Endabschnitt 42b, 44b aufweisen. Bevorzugt ist das mindestens eine Federelement 42, 44 mittels des ersten Endabschnitts 42a, 44a in der Zuführvorrichtung 4 festgelegt und der zweite Endabschnitt 42b, 44b ist an der Rüttelplatte 36 angebracht. Dadurch ist das mindestens eine Federelement 42, 44 einseitig in der Zuführvorrichtung 4 eingespannt.

Das mindestens eine Federelement 42, 44 ist vorzugsweise dazu eingerichtet, die Rüttelplatte 36 zu führen, sodass die Rüttelplatte 36 nur entlang einer definierten Bewegungsbahn bewegbar ist, die in Fig. 4 durch den Pfeil B angedeutet ist. Das mindestens eine Federelement 42, 44 ermöglicht der Rüttelplatte 36 ausschließlich eine Bewegung entlang der definierten Bewegungsbahn B, unterbindet jedoch eine davon abweichende Bewegung. Die Bewegungsbahn B liegt vorzugsweise in einer Bewegungsebene, die parallel zu einer Oberfläche 36a der Rüttelplatte 36 definiert sein kann. Obwohl die Rüttelplatte 36 nur durch das mindestens eine Federelement 42, 44 gelagert ist, bedarf es keiner weiteren Führungsmittel, um die Rüttelplatte 36 definiert zu bewegen. Es ist dann auch von Vorteil, wenn die Anregungseinheit 40 die Rüttelplatte 36 in einer Richtung anregt, die parallel zur Bewegungsebene ausgerichtet ist.

Um die Rüttelplatte 36 zu tragen, schwingend zu lagern und zu führen, ist das mindestens eine Federelement 42, 44 bevorzugt als Biegefeder, insbesondere als Blattfeder, ausgeführt. Das mindestens eine Federelement 42, 44 erstreckt sich weiter in eine Längsrichtung L als in eine erste Querrichtung Q1 und in eine zweite Querrichtung Q2. Die erste Querrichtung Q1 und die zweite Querrichtung Q2 sind senkrecht zueinander sowie senkrecht zur Längsrichtung L ausgerichtet. Eine Länge des mindestens einen Federelements 42, 44 ist in der Längsrichtung L definiert, eine Breite des mindestens einen Federelements 42, 44 ist in der ersten Querrichtung Q1 definiert und eine Höhe des mindestens einen Federelements 42, 44 ist in der zweiten Querrichtung Q2 definiert.

Das mindestens eine Federelement 42, 44 kann nur in eine Richtung verformbar sein, während es in die beiden anderen Richtungen nicht verformbar ist. Als Biegefeder ist das mindestens eine Federelement 42, 44 in der ersten Richtung Q1 verformbar, insbesondere biegbar. Die Rüttelplatte 36 kann entlang der definierten Bewegungsbahn B geführt sein, indem das mindestens eine Federelement 42, 44 nur in der ersten Querrichtung Q 1 elastisch verformbar ist und in der Längsrichtung L und der zweiten Querrichtung Q2 nicht verformbar ist. Dies kann zum Beispiel dadurch erreicht werden, dass die Länge und die Höhe des mindestens einen Federelements 42, 44 derart dimensioniert sind, dass das mindestens eine Federelement 42, 44 in Längsrichtung L und in der zweiten Querrichtung Q2 im Wesentlichen starr bzw. nicht verformbar ist, während die Breite derart gewählt ist, dass das mindestens eine Federelement 42, 44 in die erste Querrichtung verformbar, insbesondere biegbar ist.

Das mindestens eine Federelement 42, 44 weist bevorzugt eine im Wesentlichen quaderförmig Gestalt auf. Dies gilt insbesondere für den Bereich zwischen dem ersten Endabschnitt 42a, 44a und dem zweiten Endabschnitt 42b, 44b. In den Endabschnitten 42a, 42b, 44a, 44b kann das mindestens eine Federelement 42, 44 verstärkt ausgebildet sein, um eine Befestigung an der Rüttelplatte 36 bzw. in der Zuführvorrichtung 4 zu ermöglichen.

Die erste Befestigungsstelle, hier gebildet durch das Befestigungselement 46, ist vorzugsweise auf einer ersten Achse A1 angeordnet, die den Schwerpunkt S der Rüttelplatte 36 schneidet. Zudem ist die erste Achse A1 bevorzugt parallel zur ersten Querrichtung Q1 ausgerichtet, in der das mindestens eine Federelement 42, 44 verformbar bzw. die Rüttelplatte 36 bewegbar ist.

Das mindestens eine Federelement 42, 44 ist in einem ersten Befestigungsabschnitt 48 der Rüttelplatte 36 angebracht, der hier der Befestigungsstelle des Befestigungselements 46 entspricht. Erfolgt die Befestigung mittels weiterer Befestigungs- oder Sicherungsmittel an der Rüttelplatte 36 angebracht, umfasst der erste Befestigungsabschnitt 48 auch diese. Der erste Befestigungsabschnitt 48 ist in einem ersten Randbereich der Rüttelplatte 36 vorgesehen.

Die Rüttelplatte 36 kann im Wesentlichen rechteckig bzw. quaderförmig ausgebildet sein und weist die Oberseite 36a, eine Unterseite 36b sowie vier Seitenflächen 36c, 36d, 36e, 36f auf. Der erste Randbereich ist an einem ersten Rand 50 der Rüttelplatte 36 vorgesehen. Die erste Achse A1 verläuft vorzugsweise durch den ersten Befestigungsabschnitt 48 und senkrecht zur ersten Seitenfläche 36c der Rüttelplatte 36. In der dargestellten Ausführungsform ist das erste Federelement 42 im ersten Befestigungsabschnitt 48 im ersten Randbereich des ersten Rands 50 an der Rüttelplatte 36 angebracht und ist das zweite Federelement 44 in einem weiteren Befestigungsabschnitt 52 im Randbereich des Rands 54 der Seitenfläche 36e, die der ersten Seitenfläche 36c gegenüberliegt, an der Rüttelplatte 36 angebracht. Vorzugsweise verläuft die erste Achse A1 durch beide Befestigungsabschnitte 48, 52 sowie durch den Schwerpunkt S der Rüttelplatte 36. Wie dargestellt, erstreckt sich das mindestens eine Federelement 42, 44 in Längsrichtung im Wesentlichen parallel zur jeweiligen Seitenfläche 36c, 36e, in deren Randbereich es angebracht ist.

Die Anregungseinheit 40 kann in einem zweiten Befestigungsabschnitt 56 der Rüttelplatte 36 angebracht sein. Beispielsweise ist eine Halterung 58 vorgesehen, mittels derer die Anregungseinheit 40 an der Rüttelplatte 36 befestigt ist. Die Halterung 58 kann durch ein Befestigungselement (nicht dargestellt) an der Rüttelplatte 36 angebracht sein, das eine Befestigungsstelle der Anregungseinheit 40 im zweiten Befestigungsabschnitt 56 definiert. Vorzugsweise ist der zweite Befestigungsabschnitt 56 in einem zweiten Randbereich an einem zweiten Rand 60 der Rüttelplatte 36 angeordnet. Der zweite Rand 60 ist senkrecht zum ersten Rand 50 ausgerichtet bzw. bildet einen Rand der Seitenfläche 36f, die senkrecht zur ersten Seitenfläche 36c verläuft.

Eine zweite Achse A2, die senkrecht zur ersten Achse A1 ausgerichtet ist und den Schwerpunkt S der Rüttelplatte 36 schneidet, verläuft bevorzugt durch den zweiten Befestigungsabschnitt 56 und senkrecht zur Seitenfläche 36f.

In der dargestellten Ausführungsform umfasst die Zuführvorrichtung 4 genau eine Anregungseinheit 40, die ausschließlich von der Rüttelplatte 36 getragen wird. Es sind folglich keine weiteren Komponenten zur Lagerung der Anregungseinheit 40 in der Zuführvorrichtung 4 vorgesehen. Es versteht sich, dass die Anregungseinheit 40 mit flexiblen Versorgungsleitungen, wie Strom-, Steuer- und/oder Fluidleitungen zum Betätigen der Anregungseinheit 40 verbunden sein kann.

Die Anregungseinheit 40 kann, wie dargestellt, eine pneumatische oder hydraulische Zylindereinheit oder eine andere Vibrationseinrichtung umfassen. Die Anregungseinheit 40 ist dazu vorgesehen, durch Anregungsbewegungen Vibrationen zu erzeugen, die auf die Rüttelplatte 36 übertragen werden und diese in Schwingung versetzen. Um die Schwingungen zu übertragen, kann die Anregungseinheit 40 zumindest translatorisch an der Rüttelplatte 36 festgelegt sein, insbesondere starr mit der Rüttelplatte 36 verbunden sein. Eine Anregungsrichtung der Anregungsbewegung der Anregungseinheit 40 ist in Fig. 4 durch den Pfeil C gekennzeichnet und vorzugsweise parallel zur ersten Querrichtung Q1 ausgerichtet, in der das mindestens eine Federelement 42, 44 bewegbar bzw. verformbar ist und eine Bewegung der Rüttelplatte 36 entlang der Bewegungsbahn B ermöglicht.

Für den Fachmann sind basierend auf den hierin beschriebenen bevorzugten Ausführungsformen weitere Modifikationen im Rahmen der beigefügten Ansprüche ersichtlich.

## Patentansprüche

1. Zuführvorrichtung (4) zum Abgeben von als Schüttgut bereitgestellten Produkten (5), insbesondere von Solida, wie Tabletten, Kapseln oder Dragees, in einem Abgabebereich (20) der Zuführvorrichtung (4), wobei die Zuführvorrichtung (4) umfasst:
eine Sortierplatte (24) mit einer Mehrzahl von ersten Durchtrittsöffnungen (34);
eine Fördereinrichtung (29) mit einer Mehrzahl von Förderbahnen (28) zum Fördern der Produkte (5), wobei die Mehrzahl von Förderbahnen (28) durch eine Mehrzahl von Füllrohren (28) gebildet sind, wobei jeweils ein Füllrohr (28) der Mehrzahl von Füllrohren (28) mit einer ersten Durchtrittsöffnung (34) der Mehrzahl von ersten Durchtrittsöffnungen (34) in Verbindung steht;
eine Rüttelplatte (36) mit einer Mehrzahl von zweiten Durchtrittsöffnungen (38), wobei sich jeweils ein Füllrohr (28) der Mehrzahl von Füllrohren (28) durch eine zweite Durchtrittsöffnung (38) der Mehrzahl von zweiten Durchtrittsöffnungen (38) hindurch erstreckt;
**dadurch gekennzeichnet, dass**
die Rüttelplatte (36) mit der Fördereinrichtung (29) derart gekoppelt ist, dass Schwingungen der Rüttelplatte (36) auf die Fördereinrichtung (29) übertragbar sind;
die Zuführvorrichtung (4) zumindest eine Anregungseinheit (40) zum Versetzen der Rüttelplatte (36) in Schwingung umfasst, wobei die Anregungseinheit (40) mit der Rüttelplatte (36) gekoppelt ist; und
die Zuführvorrichtung (4) weiterhin mindestens ein Federelement (42, 44) umfasst, das elastisch verformbar ist und die Rüttelplatte (36) trägt und schwingend lagert.

2. Zuführvorrichtung (4) nach Anspruch 1, **dadurch gekennzeichnet, dass** die Rüttelplatte (36) ausschließlich durch das mindestens eine Federelement (42, 44) gelagert ist.

3. Zuführvorrichtung (4) nach Anspruch 1 oder 2, **dadurch gekennzeichnet, dass** die Rüttelplatte (36) mit dem mindestens einen Federelement (42, 44) starr verbunden ist.

4. Zuführvorrichtung (4) nach einem der vorangehenden Ansprüche, **dadurch gekennzeichnet, dass** das mindestens eine Federelement (42, 44) derart ausgebildet ist, dass es die Rüttelplatte (36) entlang einer definierten Bewegungsbahn führt.

5. Zuführvorrichtung (4) nach einem der vorangehenden Ansprüche, **dadurch gekennzeichnet, dass** das mindestens eine Federelement (42, 44) derart ausgebildet ist, dass es eine Bewegung der Rüttelplatte (36) in einer Bewegungsebene ermöglicht und in einer Richtung senkrecht zu der Bewegungsebene unterbindet.

6. Zuführvorrichtung (4) nach einem der vorangehenden Ansprüche, **dadurch gekennzeichnet, dass** das mindestens eine Federelement (42, 44) als Biegefeder, insbesondere als Blattfeder, ausgebildet ist, die einen ersten Endabschnitt (42a, 44a) und einen dem ersten Endabschnitt (42a, 44a) gegenüberliegenden zweiten Endabschnitt (42b, 44b) aufweist, wobei der zweite Endabschnitt (42b, 44b) an der Rüttelplatte (36) angebracht ist und der erste Endabschnitt (42a, 44a) an einer anderen Komponente der Zuführvorrichtung (4) fixiert ist.

7. Zuführvorrichtung (4) nach Anspruch 6, **dadurch gekennzeichnet, dass** das mindestens eine Federelement (42, 44) als Blattfeder ausgebildet ist, die in einer Längsrichtung (L) eine Länge, in einer ersten Querrichtung (Q1) eine Breite und in einer zweiten Querrichtung (Q2) eine Höhe aufweist, wobei die Blattfeder in der Längsrichtung (L) und in der zweiten Querrichtung (Q2) nicht verformbar ist und in der ersten Querrichtung (Q1) elastisch verformbar, insbesondere biegbar, ist.

8. Zuführvorrichtung (4) nach einem der vorangehenden Ansprüche, **dadurch gekennzeichnet, dass** das mindestens eine Federelement (42, 44) ein erstes Federelement (42) und ein zweites Federelement (44) umfasst, die einander gegenüberliegend an der Rüttelplatte (36) angebracht sind.

9. Zuführvorrichtung (4) nach einem der vorangehenden Ansprüche, **dadurch gekennzeichnet, dass** das mindestens eine Federelement (42, 44) in einem ersten Befestigungsabschnitt (48) der Rüttelplatte (36) angebracht ist, wobei der erste Befestigungsabschnitt (48) in einem ersten Randbereich der Rüttelplatte (36) vorgesehen ist, durch den eine erste Achse (A1) verläuft, die den Schwerpunkt (S) der Rüttelplatte (36) schneidet und die senkrecht zu einem ersten Rand (50) der Rüttelplatte (36) im ersten Randbereich ausgerichtet ist.

10. Zuführvorrichtung (4) nach einem der vorangehenden Ansprüche, **dadurch gekennzeichnet, dass** die Anregungseinheit (40) ausschließlich von der Rüttelplatte (36) getragen wird.

11. Zuführvorrichtung (4) nach einem der vorangehenden Ansprüche, **dadurch gekennzeichnet, dass** die Anregungseinheit (40) in einem zweiten Befestigungsabschnitt (56) der Rüttelplatte (36) angebracht ist, wobei der zweite Befestigungsabschnitt (56) in einem zweiten Randbereich der Rüttelplatte (36) angeordnet ist, durch den eine zweite Achse (A2) verläuft, die den Schwerpunkt (S) der Rüttelplatte (36) schneidet und die senkrecht zu einem zweiten Rand (60) der Rüttelplatte (36) im zweiten Randbereich ausgerichtet ist, wobei vorzugsweise die erste und die zweite Achse (A1, A2) senkrecht zueinander ausgerichtet sind.

12. Zuführvorrichtung (4) nach einem der vorangehenden Ansprüche, **dadurch gekennzeichnet, dass** die Anregungseinheit (40) einen Linearantrieb, insbesondere eine pneumatische, elektrische oder hydraulische Zylindereinheit, umfasst.

13. Verpackungsmaschine (2) zum Verpacken von als Schüttgut bereitgestellten Produkten (5), insbesondere von Solida, wie Tabletten, Kapseln oder Dragees, wobei die Verpackungsmaschine (2) umfasst:
eine Formeinrichtung (6) zum Formen von Aufnahmen in ein erstes Verpackungsmaterial (8);
eine Zuführvorrichtung (4) nach einem der vorangehenden Ansprüche zum Abgeben der Produkte (5) in die Aufnahmen; und
eine Schließeinrichtung (12) zum Verschließen der Aufnahmen mit einem zweiten Verpackungsmaterial (14).

## Claims

1. A feeding device (4) for dispensing products (5) provided in the form of bulk material, in particular for dispensing solids, such as tablets, capsules or pills, in a dispensing region (20) of the feeding device (4), wherein the feeding device (4) comprises:
a sorting plate (24) having a plurality of first passage openings (34);
a conveying device (29) having a plurality of conveying paths (28) for conveying the products (5), wherein the plurality of conveying paths (28) are formed by a plurality of filling tubes (28), wherein each filling tube (28) of the plurality of filling tubes (28) is connected to a first passage opening (34) of the plurality of first passage openings (34);
a vibrating plate (36) having a plurality of second passage openings (38), wherein each filling tube (28) of the plurality of filling tubes (28) extends through a second passage opening (38) of the plurality of second passage openings (38);
**characterised in that**
the vibrating plate (36) is coupled to the conveying device (29) in such a way that oscillations of the vibrating plate (36) are transmittable to the conveying device (29);
the feeding device (4) comprises at least one excitation unit (40) for setting the vibrating plate (36) in oscillation, wherein the excitation unit (40) is coupled to the vibrating plate (36); and
the feeding device (4) further comprises at least one spring element (42, 44), which is elastically deformable, carries the vibrating plate (36) and supports the vibrating plate (36) in an oscillating manner.

2. The feeding device (4) according to claim 1, **characterised in that** the vibrating plate (36) is supported exclusively by the at least one spring element (42, 44).

3. The feeding device (4) according to claim 1 or 2, **characterised in that** the vibrating plate (36) is rigidly connected to the at least one spring element (42, 44).

4. The feeding device (4) according to any one of the preceding claims, **characterised in that** the at least one spring element (42, 44) is configured in such a way that the vibrating plate (36) is guided along a defined movement path.

5. The feeding device (4) according to any one of the preceding claims, **characterised in that** the at least one spring element (42, 44) is configured in such a way that it allows a movement of the vibrating plate (36) in a movement plane and prevents movement in a direction perpendicular to the movement plane.

6. The feeding device according to any one of the preceding claims, **characterised in that** the at least one spring element (42, 44) is designed as a flexible spring, in particular as a leaf spring, which has a first end portion (42a, 44a) and a second end portion (42b, 44b) opposite the first end portion (42a, 44a), wherein the second end portion (42b, 44b) is attached to the vibrating plate (36) and the first end portion (42a, 44a) is fixed to another component of the feeding device (4).

7. The feeding device (4) according to claim 6, **characterised in that** the at least one spring element (42, 44) is designed as a leaf spring which has a length in a longitudinal direction (L), a width in a first transverse direction (Q1) and a height in a second transverse direction (Q2), wherein the leaf spring is not deformable in the longitudinal direction (L) and in the second transverse direction (Q2) and is elastically deformable, in particular bendable, in the first transverse direction (Q1).

8. The feeding device (4) according to any one of the preceding claims, **characterised in that** the at least one spring element (42, 44) comprises a first spring element (42) and a second spring element (44), which are attached opposite each other to the vibrating plate (36).

9. The feeding device (4) according to any one of the preceding claims, **characterised in that** the at least one spring element (42, 44) is attached to a first fastening portion (48) of the vibrating plate (36), wherein the first fastening portion (48) is provided in a first edge region of the vibrating plate (36), through which a first axis (A1) extends which intersects the centre of gravity (S) of the vibrating plate (36) and which is oriented perpendicular to a first edge (50) of the vibrating plate (36) in the first edge region.

10. The feeding device (4) according to any one of the preceding claims, **characterised in that** the excitation unit (40) is supported exclusively by the vibrating plate (36).

11. The feeding device (4) according to any one of the preceding claims, **characterised in that** the excitation unit (40) is attached to a second fastening portion (56) of the vibrating plate (36), wherein the second fastening portion (56) is arranged in a second edge region of the vibrating plate (36), through which a second axis (A2) extends, which intersects the centre of gravity (S) of the vibrating plate (36) and which is oriented perpendicular to a second edge (60) of the vibrating plate (36) in the second edge region, wherein preferably the first and the second axis (A1, A2) are oriented perpendicular to one another.

12. The feeding device (4) according to any one of the preceding claims, **characterised in that** the excitation unit (40) comprises a linear drive, in particular a pneumatic, electric or hydraulic cylinder unit.

13. A packaging machine (2) for packaging products (5) provided in the form of bulk material, in particular solids, such as tablets, capsules or pills, wherein the packaging machine (2) comprises:
a forming device (6) for forming receptacles in a first packaging material (8);
a feeding device (4) according to any one of the preceding claims for dispensing the products (5) into the receptacles; and
a closing device (12) for closing the receptacles with a second packaging material (14).

## Revendications

1. Dispositif d'alimentation (4), destiné à distribuer des produits (5), mis à disposition sous la forme de produits en vrac, notamment de solides, tels que des comprimés, des gélules ou des dragées dans une zone de distribution (20) du dispositif d'alimentation (4), le dispositif d'alimentation (4) comprenant :
un plateau de tri (24), doté d'une pluralité d'orifices de passage (34) ;
un système d'acheminement (29), doté d'une pluralité de bandes d'acheminement (28) pour acheminer les produits (5), la pluralité de bandes d'acheminement (28) étant constituées d'une pluralité de tubes de remplissage (28), chaque fois un tube de remplissage (28) de la pluralité de tubes de remplissage (28) étant en liaison avec un premier orifice de passage (34) de la pluralité de premiers orifices de passage (34) ;
un plateau vibrant (36), doté d'une pluralité de deuxièmes orifices de passage (38), chaque fois un tube de remplissage (28) de la pluralité de tubes de remplissage (28) s'étendant à travers un deuxième orifice de passage (38) de la pluralité de deuxièmes orifices de passage (38) ;
**caractérisé en ce que**
le plateau vibrant (36) est accouplé avec le système d'acheminement (29), de telle sorte que les vibrations du plateau vibrant (36) soient transmissibles sur le système d'acheminement (29) ;
le dispositif d'alimentation (4) comprend au moins une unité d'excitation (40), destinée à amener le plateau vibrant (36) en vibration, l'unité d'excitation (40) étant accouplée avec le plateau vibrant (36) ; et
le dispositif d'alimentation (4) comprend par ailleurs au moins un élément à ressort (42, 44) qui est élastiquement déformable et porte le plateau vibrant (36) et qui le supporte en lui permettant de vibrer.

2. Dispositif d'alimentation (4) selon la revendication 1, **caractérisé en ce que** le plateau vibrant (36) est supporté exclusivement par l'au moins un élément à ressort (42, 44).

3. Dispositif d'alimentation (4) selon la revendication 1 ou 2, **caractérisé en ce que** le plateau vibrant (36) est relié de manière rigide avec l'au moins un élément à ressort (42, 44).

4. Dispositif d'alimentation (4) selon l'une quelconque des revendications précédentes, **caractérisé en ce que** l'au moins un élément à ressort (42, 44) est conçu de sorte à guider le plateau vibrant (36) le long d'un trajet de déplacement.

5. Dispositif d'alimentation (4) selon l'une quelconque des revendications précédentes, **caractérisé en ce que** l'au moins un élément à ressort (42, 44) est conçu de sorte à permettre un déplacement du plateau vibrant (36) dans un plan de déplacement et à l'empêcher dans une direction à la perpendiculaire du plan de déplacement.

6. Dispositif d'alimentation (4) selon l'une quelconque des revendications précédentes, **caractérisé en ce que** l'au moins un élément à ressort (42, 44) est conçu sous la forme d'un ressort de flexion, notamment d'un ressort à lame, qui comporte une première portion d'extrémité (42a, 44a) et une deuxième portion d'extrémité (42b, 44b), placée au regard de la première portion d'extrémité (42a, 44a), la deuxième portion d'extrémité (42b, 44b) étant montée sur le plateau vibrant (36) et la première portion d'extrémité (42a, 44a) étant fixée sur un autre composant du dispositif d'alimentation (4).

7. Dispositif d'alimentation (4) selon la revendication 6, **caractérisé en ce que** l'au moins un élément à ressort (42, 44) est conçu sous la forme d'un ressort à lame, qui dans une direction longitudinale (L) présente une longueur, dans une première direction transversale (Q1) présente une largeur et dans une deuxième direction transversale (Q2) présente une hauteur, le ressort à lame n'étant pas déformable dans la direction longitudinale (L) et dans la deuxième direction transversale (Q2) et étant élastiquement déformable, notamment flexible dans la première direction transversale (Q1).

8. Dispositif d'alimentation (4) selon l'une quelconque des revendications précédentes, **caractérisé en ce que** l'au moins un élément à ressort (42, 44) comprend un premier élément à ressort (42) et un deuxième élément à ressort (44) qui sont montés sur le plateau vibrant (36) en étant placés au regard l'un de l'autre.

9. Dispositif d'alimentation (4) selon l'une quelconque des revendications précédentes, **caractérisé en ce que** l'au moins un élément à ressort (42, 44) est monté dans une première portion de fixation (48) du plateau vibrant (36), la première portion de fixation (48) étant prévue dans une première zone de bordure du plateau vibrant (36), s'écoulant à travers un premier axe (A1), qui recoupe le centre de gravité (S) du plateau vibrant (36) et qui est orienté à la perpendiculaire d'un premier bord (50) du plateau vibrant (36) dans la première zone de bordure.

10. Dispositif d'alimentation (4) selon l'une quelconque des revendications précédentes, **caractérisé en ce que** l'unité d'excitation (40) est portée exclusivement par le plateau vibrant (36).

11. Dispositif d'alimentation (4) selon l'une quelconque des revendications précédentes, **caractérisé en ce que** l'unité d'excitation (40) est montée dans une deuxième portion de fixation (56) du plateau vibrant (36), la deuxième portion de fixation (56) étant placée dans une deuxième zone de bordure du plateau vibrant (36), à travers laquelle s'écoule un deuxième axe (A2) qui recoupe le centre de gravité (S) du plateau vibrant (36) et qui est orienté à la perpendiculaire d'un deuxième bord (60) du plateau vibrant (36) dans la deuxième zone de bordure, de préférence le premier et le deuxième axes (A1, A2) étant orientés à la perpendiculaire l'un de l'autre.

12. Dispositif d'alimentation (4) selon l'une quelconque des revendications précédentes, **caractérisé en ce que** l'unité d'excitation (40) comprend un entraînement linéaire, notamment une unité de vérin pneumatique, électrique ou hydraulique.

13. Machine d'emballage (2), destinée à emballer des produits (5) mis à disposition sous la forme de produits en vrac, notamment de solides, tels que des comprimés, des gélules ou des dragées, la machine d'emballage (2) comprenant :
un système de façonnage (6), destiné à façonner des logements dans une première matière d'emballage (8) ;
un dispositif d'alimentation (4) selon l'une quelconque des revendications précédentes, destiné à distribuer des produits (5) dans les logements ; et
un système de fermeture (12), destiné à fermer les logements avec une deuxième matière d'emballage (14).
